# EUROPEAN PATENT APPLICATION

(11) **EP 0 889 279 A2**
(43) Date of publication of application: **07.01.1999**
(21) Application number: 98111569.4
(22) Date of filing: 24.06.1998
(51) Int. Cl.: F17C 5/06, F17C 13/06, F16F 9/43

(54) **Apparatus and method for filling and sealing a vessel with high pressure gas**

(30) Priority: 02.07.1997 US 887208
(71) Applicant: ROBERT BOSCH CORPORATION, Broadview, Illinois 60153-4594 (US)
(72) Inventor: Weachock, Richard H., Stevensville, Michigan 49127 (US); Papai, Tod, La Porte, Indiana 46350 (US); Chodzinski, Thomas M., South Bend, Indiana 46628 (US)
(74) Representative: RACKETTE Partnerschaft Patentanwälte

(57) **Abstract**

An apparatus and a method for filling and sealing a pressure vessel with high pressure gas using a sealing element which allows a gas fill and weld head assembly to form a reliable, reusable gas tight seal with the surface of the pressure vessel each time the filling and sealing operation is performed. The sealing element is made of a relatively hard, gas impermeable material having a knife edge which bites into the surface of the pressure vessel to form a gas tight seal between the sealing element and the surface of the pressure vessel. As the sealing element is made of a relatively hard, gas impermeable material, such as steel, the high pressure gas and stall molecule gasses do not permeate into nor diffuse rapidly out of the sealing element, and thus the integrity of the sealing element is maintained over repeated use. The present invention is particularly suited for filling and sealing airbag canisters, but may be used in any application wherein a pressure vessel must be filled and sealed with high pressure gas.

## Description

### BACKGROUND OF THE INVENTION

### 1. Field of the Invention.

The present invention relates to an apparatus and a method for filling and sealing a pressure vessel with high pressure gas.

### 2. Description of the Related Art.

Apparatuses for supplying gas under high pressure to a pressure vessel and thereafter sealing the vessel by welding are known in the art. Such apparatuses usually include a gas fill and weld head assembly having a primary bore disposed therein. During operation, the gas fill and weld head assembly and the vessel are moved and positioned with respect to each other such that a fill opening disposed on the surface of the vessel is aligned with the primary bore and a gas tight seal is formed between the gas fill and weld head assembly ad the vessel surface. The high pressure gas is then introduced into the vessel through the primary bore and the fill opening until the desired pressure is reached. When the interior of the vessel has reached the desired pressure, a weld ball feed system associated with the gas fill and weld head assembly places a weld ball on top of the fill opening via the primary bore or a passageway connected to the primary bore. A retractable welding electrode disposed inside the primary bore then welds the weld ball into the fill opening to seal the vessel. Such an apparatus is disclosed in U.S. Pat. No. 5,495,699, issued to Thomas L. Buckley, Jr., which is assigned to the assignee of the present application and is expressly incorporated herein.

One application for an apparatus of the above type has been in filling high pressure gas vessels which are used for deploying automotive airbags. In such applications, there has been a need to reduce the size of the pressure vessels ad a corresponding need to increase the gas pressure in the pressure vessel. There has also been a desire to fill such canisters with Helium gas which has small sized molecules compared to other conventionally used gas, such as Argon.

A problem with maintaining a gas tight seal arises when a conventional apparatus and a method are used to fill and seal a vessel with very high pressure gas, for example above 5,000 psi, or with a gas which has small molecule size such as Helium. Conventionally, the gas fill ad weld head assembly is placed in contact with the surface of the vessel such that a gas tight seal is formed between a sealing element of the gas fill and weld head assembly and the surface of the vessel. The sealing element is usually of a relatively flexible, compliant, gas permeable seal, such as a rubber "O" ring, which deforms to follow the contours of the vessel surface. However, such a sealing element is inadequate when the apparatus must operate above 4,000 psi. Due to the permeability of the sealing element material, small gas molecules at such pressures easily permeate into the sealing element material when the primary bore is pressurized, thereby building up pressure in the void spaces of the sealing element material as the vessel is filled. Conversely, when the primary bore is depressurized after the vessel has been sealed, the gas absorbed in the sealing element material rapidly diffuses out of the sealing element material. In the apparatuses described above, the rate of decompression is high enough so that the rapid diffusion of the gas molecules out of the relatively soft sealing element material destroys the material. Therefore, the gas tight integrity of the sealing element material cannot be maintained at high pressures and the conventional sealing elements are unable to provide a reliable, reusable seal between the gas fill and weld head assembly and the vessel surface.

The problem is worsened when the vessel must be filled with a small molecular gas which can more readily permeate into and diffuse out of the sealing element material.

Therefore, what is needed is an apparatus and a method which can reliably and reusably fill and seal a vessel with high pressure gas, in particular, at a pressure above about 4,000 psi.

What is also needed is an apparatus and a method which can reliably and reusably fill and seal a vessel with a small molecular gas.

### SUMMARY OF THE INVENTION

The present invention provides an apparatus and a method for filling and sealing a weldable vessel with high pressure gas, particularly gas at a pressure above about 4,000 psi. The present invention can also advantageously be used with a small molecule gas, such as helium. The present apparatus includes a sealing insert which forms a gas tight seal with the surface of the vessel such that a reliable, consistent, reusable gas tight seal can be formed each time a filling and sealing operation is performed. The sealing insert is made of a relatively hard, gas impermeable material, which is harder than the vessel material, and seats against the surface of the vessel to form a gas tight seal. The sealing insert advantageously includes a knife edge which is capable of biting into the surface of the vessel to ensure that a gas tight seal is formed. The hard, gas impermeable nature of the sealing insert material prevents the gas molecules from permeating into the sealing insert, even under very high pressure and in the case of small molecular gasses, thereby preventing the problems discussed above.

The present invention comprises, in one form thereof, an apparatus for filling and sealing a vessel with high pressure gas, the vessel having an interior volume connected with a fill opening disposed on a surface of the vessel, the apparatus comprising a mechanism for providing high pressure gas, the mechanism including a bore adapted to introduce the high pressure gas into the vessel, the bore having disposed therein a weld ball and a retractable welding electrode to close the fill opening, the mechanism further including a sealing insert made of a relatively hard, gas impermeable material which is harder than the material of the vessel and having a knife edge adapted to bite into the surface of the vessel to form a seal. The apparatus also includes a mechanism for positioning the vessel with respect to the sealing insert and a press mechanism for moving the vessel against the knife edge with sufficient force to form a seal between the sealing insert knife edge ad the vessel surface.

The invention comprises, in another form thereof, a method for filling and sealing a vessel with high pressure gas comprising the steps of providing a vessel having an interior volume connected with a fill opening disposed on a surface thereof, and a gas fill and weld head assembly having a sealing insert with a knife edge, wherein the sealing insert is made of a hard, gas impermeable material which is harder than the material of the vessel, pressing the surface of the vessel against the sealing insert knife edge with sufficient force such that the knife edge bites into the surface of the vessel to form a seal between the sealing insert and the surface of the vessel, introducing high pressure gas through, the gas fill and weld head assembly to fill the interior volume of the vessel with high pressure gas and closing the fill opening with a weld ball after the desired pressure has been reached inside the vessel.

An advantage of the present invention is that the vessel may be filled with a very high pressure gas, in particular pressure above about 4,000 psi, without damaging the sealing element.

Another advantage of the present invention is that it is possible to form a reliable, reusable gas tight seal against a high pressure gas each time the filling and sealing operation is performed.

A further advantage is that the sealing insert is effective in forming a gas tight seal when the filling and sealing operation is performed with a small molecule gas, such as helium.

### BRIEF DESCRIPTION OF THE DRAWINGS

The above-mentioned and other features and objects of this invention, and the manner of attaining them, will become more apparent and the invention itself will be better understood by reference to the following description of an embodiment of the invention taken in conjunction with the accompanying drawings, wherein:
Fig. 1 is a side elevational view of an apparatus of the present invention, including a partial sectional view of the gas fill and weld head assembly;
Fig. 2 is a fragmentary detailed view of Fig. 1 showing a vessel head placed in contact with the gas fill and weld head assembly;
Fig. 3 is fragmentary detailed view of Fig. 2 showing the knife edge of the sealing insert seated against the surface of the vessel to form a gas tight seal;
Fig. 4 is a top plan view of the sealing insert; and
Fig. 5 is a sectional view of the sealing insert taken along lines 5-5 of Fig. 4.

Corresponding reference characters indicate corresponding parts throughout the several views. Although the drawings represent an embodiment of the present invention, the drawings are not necessarily to scale and certain features may be exaggerated in order to better illustrate and explain the present invention. The exemplification set out herein illustrates an embodiment of the invention, in one form, and such exemplifications are not to be construed as limiting the scope of the invention in any manner.

### DESCRIPTION OF THE PRESENT INVENTION

The embodiment disclosed below is not intended to be exhaustive or limit the invention to the precise form disclosed in the following detailed description. Rather, the embodiment is described so that others skilled in the art may be able to utilize its teachings.

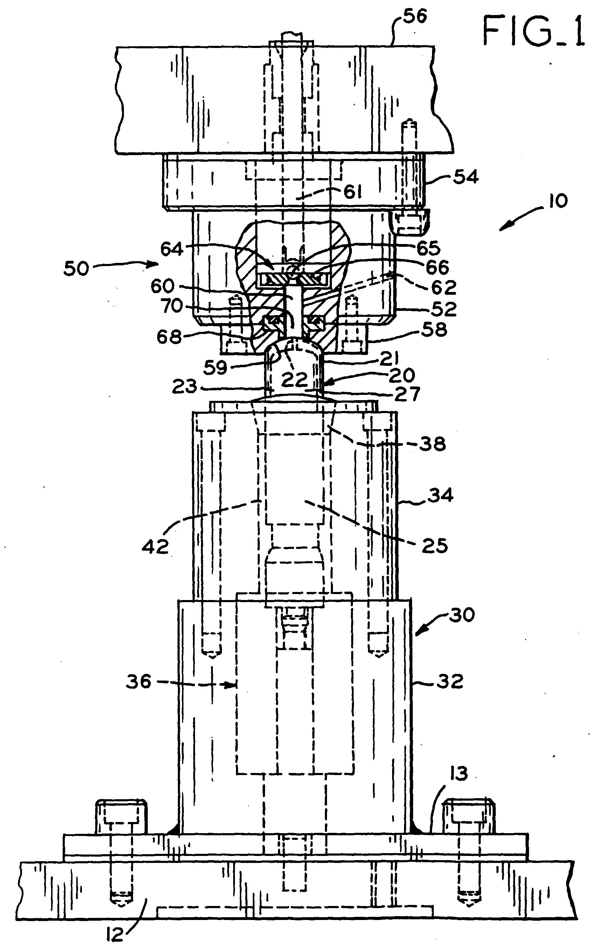

Referring now to Fig. 1, a filling and sealing system 10 is shown for filling and sealing a vessel with high pressure gas. System 10 comprises support and positioning assembly 30 adapted to hold and move vessel 20 as necessary with respect to gas fill and weld head assembly 50. Support and positioning assembly 30 positions vessel 20 such that fill opening 22 of vessel 20 is properly aligned so that high pressure gas can be provided by gas fill and weld head assembly 50 through fill opening 22.

Support and positioning assembly 30 comprises lower assembly portion 32 and upper assembly portion 34 mounted on base 13. Base 13 is mounted on lower support 12 using threaded fasteners or any other suitable attaching means, and provides stable support for the devices mounted thereon. Support and positioning assembly 30 includes receptacle 42 disposed therein, which is adapted to receive and securely hold vessel 20 in place. Collet 38 disposed inside receptacle 42 provides further support and alignment for vessel 20.

Also disposed in support ad positioning assembly 30 is a pneumatic and hydraulic press assembly 36 which moves vessel 20 against gas fill and weld head assembly 50 with sufficient force to form a gas tight seal between vessel head surface 24 and sealing insert 68. Although the details of the pneumatic and hydraulic press assembly are not shown in Fig. 1, it is to be understood that the pneumatic and hydraulic press assembly may comprise any pneumatic and hydraulic mechanism capable of axially moving vessel 20 with sufficient force against gas fill and weld head assembly 50 so that sealing takes place as described hereinafter.

Vessel 20 is generally cylindrical in shape and includes lower portion 25 which rests inside receptacle 42 and upper portion 27 which remains exposed above upper assembly portion 34. Vessel 20 is conventionally made of stainless or carbon steel. As shown in Figs. 1-2, upper portion 27 of vessel 20 includes a dome shaped vessel head 21 having fill opening 22 disposed therein. Fill opening 22 is connected to interior space 23 of vessel 20. It is to be understood that vessel 20 is not limited to the shape and dimensions of vessel 20 and receptacle 42 may be changed as required for a particular application.

The details of gas fill and weld head assembly 50 are now described. Gas fill and weld head assembly 50 combines the functions of providing high pressure gas to fill opening 22 to fill the interior of vessel 20 and closing fill opening 22. Gas fill and weld head assembly 50 comprises part locator 58 attached to lower weld head 52, which is attached to upper weld head 54, which is in turn attached to upper support 56. Components 58, 52, 54 and 56 are respectively attached to each other with threaded bolts or other suitable fastening devices.

Part locator 58 is annular in shape and includes concave dome shaped indentation 59 having a interior surface which engages vessel head 21. Indentation 59 is shaped to snugly engage vessel head surface 24 and align fill opening 22 with gas fill and weld head assembly 50 such that sealing insert 68 can form a gas tight seal with vessel head surface 24. Part locator 58 includes space 67 wherein sealing insert 68 is disposed.

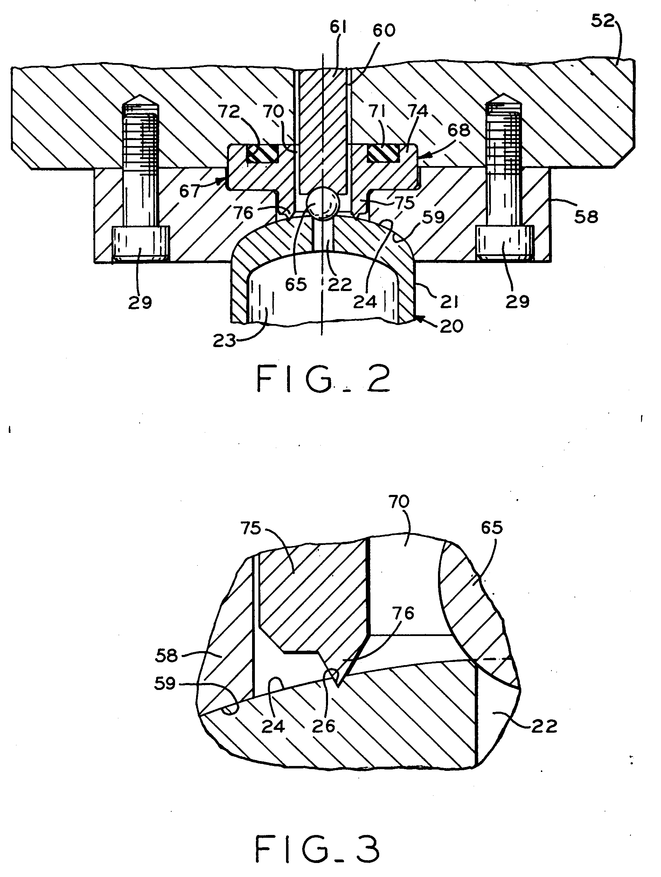

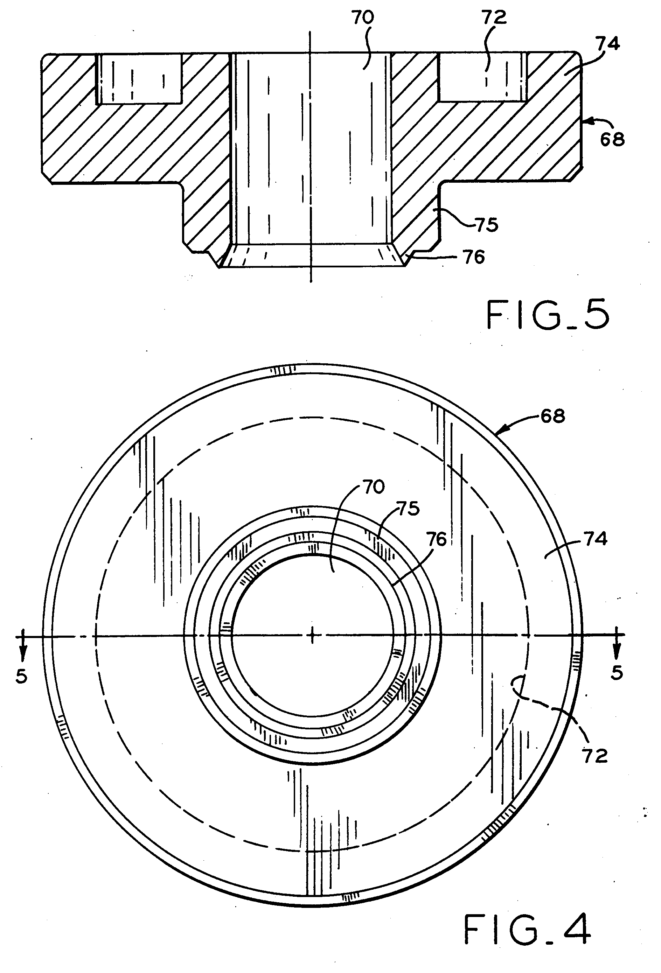

As shown in Figs. 2-5, sealing insert 68 is disposed between part locator 58 and lower weld head 52, and contacts vessel head surface 24 to form a gas tight seal. As particularly shown in Figs. 2 and 5, sealing insert 68 comprises a generally annular insert body 74 and extension 75 having a knife edge 76. Insert body 74 includes cavity 72 wherein seal 71 is disposed. Sealing insert 68 also includes bore 70 which extends through sealing insert 68 and is aligned with bore 60 as described further below.

Sealing insert 68 is advantageously made of a relatively hard, dense material which is substantially impermeable to gas. Such a material may comprise, but is not limited to, tool steel with good wear and impact properties. The relatively hard, gas impermeable nature of the sealing material allows sealing insert 68 to repeatedly and reliably form a gas tight seal as described below. In the present embodiment, sealing insert 68 is harder than vessel head 21.

The sealing insert and the vessel surface are made of materials having different relative hardnesses such that when sealing insert 68 and vessel head surface 24 are pressed together with sufficient force, the element which is made of the harder material bites into the surface of the less hard material thereby forming a gas tight seal between the sealing insert and the vessel surface. A knife edge or a similar structure provided on the element made of the harder material ensures that the harder material will bite into the less hard material, i.e., form a groove or depression in the surface of the less hard material. The action of deforming one of the surfaces ensures a good seal by conforming the shapes of the two surfaces at their contact area and their thus preventing leakage of gas therethrough.

As previously noted, support and positioning assembly 30 moves vessel 20 upwardly into contact with sealing insert 68 with sufficient force such that the contact between sealing insert 68 and vessel head surface 24 forms a gas tight seal. In particular, knife edge 76 bites into vessel head surface 24 to ensure that a gas tight seal is formed. As shown in Figs. 2-3, when vessel head 21 is pressed into sealing insert 68 with sufficient force, the tip of knife edge 76 bites, or digs, into vessel head surface 24 such that vessel head surface 24 is deformed around the contours of knife edge 76 and forms a seal. The biting action deforms vessel head surface 24 such that a indentation is formed on vessel head surface 24. The deformation ensures that a gas tight seal is formed.

It is to be understood that although the present invention uses sealing insert 68 to bite into the surface of vessel head surface 24, vessel 20 may be made of a harder material than sealing edge 68 and a knife edge may be added to vessel 20 such that the knife edge on vessel 20 bites into the surface of sealing insert 68 to achieve a gas tight seal. Again, the biting action results because sealing insert 68 and vessel 20 are made of materials of differing relative hardness, the relatively sharp edge, and the force with which the sealing insert and vessel are pressed to together.

It is also to be understood that although the present invention uses a mechanism whereby vessel 20 is moved and aligned with gas fill and weld head assembly 50, any movement and positioning mechanism which provides relative movement between gas fill and weld head assembly 50 and vessel 20 may be used. It is only necessary that either or both gas fill and weld head assembly 50 and vessel be moved into proper alignment with respect to each other and pressed together such that sealing insert 68 bites into vessel head surface 24.

In contrast to previous sealing mechanisms which employ sealing material made of relatively soft, compliant, flexible, porous material, the present invention employs sealing insert 68 made of relatively hard, gas impermeable material, such as tool steel. In particular, sealing insert 68 is made of material which is harder than the material of vessel 20. Rather than conforming to the shape of the vessel head surface, the present sealing insert 68 bites into the vessel head surface to form the seal. The relatively hard, gas impermeable nature of the material comprising sealing insert 68 enables knife edge 76 to bite into vessel head surface 24 and form a strong seal. Due to its gas impermeability, small molecule gasses and gasses under high pressure essentially do not diffuse into sealing insert 68, thereby obviating the problems discussed above, and repeated operations use of the present invention is possible without deterioration of the sealing capability.

In operation, as shown in Figs. 1 and 2, sealing insert bore 70 is axially aligned with bore 60 of lower weld head 52. Bore 60 is in fluid communication with gas fill port 62 which provides high pressure gas once a gas tight seal has been established. Bore 60 also includes an associated weld ball retainer assembly 64 which provides a weld ball 65 to be placed on fill opening 22 prior to closing fill opening 22. Weld ball retainer assembly 64 maintains weld ball 65 in bore 60 using movable fingers 66. The outward movement of fingers 66 drops weld ball 65 onto vessel head 21 by gravity feed after the pressure inside vessel 20 has reached the desired level. Retractable welding electrode 61 is also disposed inside bore 60 and is movable as necessary to weld weld ball 65 into seal fill opening 22.

The method of filling and sealing a vessel with high pressure gas or small molecule gas using the apparatus of the present invention is now described. As shown in Fig. 1, vessel 20 is initially placed inside receptacle 42 and secured in position by collet 38. Vessel 20 is then moved under gas fill and weld head assembly 50 and positioned such that fill opening 22 is aligned with bores 70 and 60. Once vessel 20 is properly aligned, the pneumatic and hydraulic press assembly pneumatically lifts vessel 20 upward into contact with part locator 58, then hydraulically applies a power stroke to form a seal between vessel head surface 24 and sealing insert 68. The application of the power stroke forces knife edge 76 into vessel head surface 24 with sufficient force to bite into and form indentation 26 to form a seal between sealing insert 68 and vessel head surface 24. Once the gas tight seal is formed, high pressure gas is introduced into bore 60 through gas fill port 62. The high pressure gas flows into interior space 23 through bore 60, sealing insert bore 70 and fill opening 22.

Once the desired pressure has been reached, fingers 66 retract to drop weld ball 65 by gravity feed onto fill opening 22. Weld ball 65 drops, by gravity, onto fill opening 22 as the pressure inside bore 60 is stabilized at the final, desired pressure at all points. After weld ball 65 is located on top of fill opening 22, welding electrode 61 is positioned on top of weld ball 65 as shown in Fig. 2, to conduct the welding process. Once the welding is complete, fill opening 22 is completely closed and interior space 23 has been filled and sealed with high pressure gas. During the course of this operation, the seating of sealing insert 68, particularly knife edge 76, against vessel head surface 24 maintains a gas tight seal to maintain bore 60 and the interior of vessel 20 pressurized. As sealing insert 68 is made of a relatively hard, gas impermeable material, the high pressure gas and small molecule gasses do not permeate into sealing insert 68, and thus, the above-cited problem of high pressure gas pressurizing voids in the sealing material is avoided.

Once fill opening 22 has been closed, bore 60 and gas fill port 62 are depressurized, vessel 20 is lowered to disengage vessel head surface 24 from knife edge 76, and support and positioning assembly 30 is repositioned such that vessel 20 may be removed from receptacle 42. Again, as the high pressure gas does not permeate into sealing insert 68, the problem of gas rapidly diffusing out of sealing insert 68 and destroying the integrity of sealing insert 68 when the system is depressurized is overcome.

While this invention has been described as having an exemplary design, the present invention may be further modified within the spirit and scope of this disclosure. This application is therefore intended to cover any variations, uses, or adaptations of the invention using its general principles. It is to be understood that it may be used in any application wherein a vessel is filled and sealed with high pressure gas. Also, it is to be understood that either the surface of the vessel or the surface of a gas impermeable material used as a sealing element may be deformed to form the gas tight seal. Further, this application is intended to cover such departures from the present disclosure as come within known or customary practice in the art to which this invention pertains.

## Claims

1. An apparatus for filling a pressure vessel with high pressure gas through a fill opening in said pressure vessel and for closing said fill opening, said apparatus comprising:
means for supplying high pressure gas to a said fill opening;
means for sealing an area around a said fill opening while high pressure gas is supplied thereto, said sealing means operatively associated with said gas supplying means;
an edge disposed on one of said sealing means and the pressure vessel, said edge sufficiently hard to deform the other of said sealing means and the pressure vessel to form a seal; and
means for closing said fill opening.

2. The apparatus of claim 1, wherein said edge is made of a gas impermeable, metallic material.

3. The apparatus of claim 1, wherein said edge is disposed on said sealing means.

4. The apparatus of claim 1, wherein said gas providing means comprises a first passage adapted to convey high pressure gas and said sealing means includes a second passage aligned with said first passage whereby high pressure gas can pass through said second passage.

5. The apparatus of claim 1, wherein said closing means comprises a weld ball retainer assembly adapted to place a weld ball on said fill opening and a welding assembly adapted to weld said weld ball into said fill opening.

6. The apparatus of claim 5, wherein said weld ball retainer assembly is adapted to place said weld ball on said fill opening by gravity feed.

7. The apparatus of claim 4, wherein said closing means comprises a weld ball retainer assembly adapted to place a weld ball on said fill opening and a welding assembly adapted to weld said weld ball into said fill opening, said weld ball retainer assembly adapted to place said weld ball on said fill opening by gravity feed, said welding assembly movably disposed in said first passage.

8. An apparatus for filling a pressure vessel with high pressure gas through a fill opening in said pressure vessel and for closing said fill opening, said apparatus comprising:
means for providing high pressure gas;
means for sealing an area around a said fill opening while gas is supplied thereto, said sealing means operatively associated with said gas providing means;
an edge disposed on one of said sealing means and the pressure vessel, said edge sufficiently hard to deform the other of said sealing means and the pressure vessel form a seal;
means for relatively moving said sealing means and the pressure vessel, said moving means adapted to align and press said sealing means and the pressure vessel together whereby said edge deforms one of said sealing means and the pressure vessel; and
means for closing said fill opening.

9. The apparatus of claim 2, wherein said edge is made of a gas impermeable, metallic material.

10. The apparatus of claim 2, wherein said edge is disposed on said sealing means.

11. The apparatus of claim 2, wherein said gas providing means comprises a first passage adapted to introduce high pressure gas, said sealing means includes a second passage aligned with said first passage whereby high pressure gas can pass through said second passage and said relative moving means is adapted to align said second passage with said fill opening.

12. The apparatus of claim 11, wherein said closing means comprises a weld ball retainer assembly adapted to place a weld ball on said fill opening by gravity feed and a welding assembly adapted to weld said weld ball into said fill opening.

13. The apparatus of claim 12, wherein said closing means is disposed in said passage.

14. The apparatus of claim 2, wherein said moving means includes a hydraulic moving means and a pneumatic moving means.

15. A method for filling a pressure vessel with high pressure gas through a fill opening disposed in a surface of said pressure vessel from a filling apparatus, said filling apparatus including a closing mechanism for closing said fill opening and a sealing adapter, the method comprising:
forming a seal between said filling apparatus and said pressure vessel surface by relatively moving said filling apparatus and said pressure vessel with respect to each other to form a depression in one of said filling apparatus and said pressure vessel;
filling said pressure vessel with high pressure gas; and
closing said fill opening.

16. The method of claim 15, wherein said forming step comprises hydraulically pressing said sealing adapter ad said pressure vessel together with sufficient force to form said depression in said pressure vessel.

17. The method of claim 15, wherein said filling step comprises filling said pressure vessel with high pressure gas having small molecule size.

18. The method of claim 15, wherein said closing step comprises placing a weld ball on said fill opening and welding the weld ball into said fill opening.

19. A method for filling a pressure vessel with high pressure gas through a fill opening disposed in a surface of said pressure vessel from a filling apparatus, said filling apparatus including a passage for supplying high pressure gas and a closing mechanism for closing said fill opening, the method comprising:
providing a sealing adapter having an edge, said sealing adapter operably associated with said filling adapter, said sealing adapter sufficiently hard to deform said pressure vessel;
positioning said filling apparatus and said pressure vessel relative to each other such that said fill opening is aligned with said passage;
forming a seal between said filling apparatus and said pressure vessel surface by relatively moving said sealing adapter and said pressure vessel with respect to each other to deform said pressure vessel surface;
filling said pressure vessel with high pressure gas by introducing high pressure gas from the filling apparatus through the fill opening; and
closing said fill opening.

20. The method of claim 19, wherein said edge is made of a gas impermeable, metallic material.

21. The method of claim 19, wherein said forming step comprises pneumatically moving said sealing adapter and said pressure vessel into contact with each other and thereafter hydraulically pressing said sealing adapter and said pressure vessel together with sufficient force to deform said pressure vessel surface.

22. The method of claim 19, wherein said filling step comprises filling the pressure vessel with high pressure gas having small molecule size.

23. The method of claim 19, wherein said closing step comprises placing a weld ball on said fill opening and welding the weld ball into said fill opening.

24. The method of claim 19, wherein said filling step comprises filling the pressure vessel to a test pressure, maintaining the test pressure for a predetermined period of time and depressurizing the pressure vessel to an operating pressure.
